# EUROPÄISCHE PATENTSCHRIFT

(11) **EP 2 093 385 B1**
(45) Veröffentlichungstag und Bekanntmachung des Hinweises auf die Patenterteilung: **21.10.2015**
(21) Anmeldenummer: 09001449.9
(22) Anmeldetag: 03.02.2009
(51) Int. Cl.: F01D 25/18, F01M 11/12

(54) **Fluggasturbinenöltank mit Füllstandsanzeige**
Gas turbine engine oil tank with fill level display
Réservoir d'huile d'un moteur de turbine à gaz doté d'un affichage du niveau de remplissage

(30) Priorität: 19.02.2008 DE 102008009825
(43) Veröffentlichungstag der Anmeldung: 26.08.2009
(73) Patentinhaber: Rolls-Royce Deutschland Ltd & Co KG, 15827 Blankenfelde-Mahlow (DE)
(72) Erfinder: Pisseloup, Arnaud, 80339 München (DE)
(74) Vertreter: Hoefer & Partner Patentanwälte mbB

(56) Entgegenhaltungen:
- WO-A-01/09570
- WO-A-2004/009962
- US-A- 4 440 022
- US-A- 5 555 857
- US-A1- 2006 000 103

## Beschreibung

Die Erfindung bezieht sich auf eine Fluggasturbine mit einem Öltank, welcher ein Gehäuse aufweist, welches mit einer Öleinfüllöffnung versehen oder verbunden ist.

Aus dem Stand der Technik ist es bei Fluggasturbinen oder anderen Flugzeugmotoren bekannt, den Ölstand in einem Öltank entweder im Cockpit anzuzeigen und abzulesen, wobei hierfür ein Sensor und eine Übermittlungsleitung erforderlich sind, oder den Ölstand direkt an dem Öltank mittels eines Sichtglases oder Schauglases abzulesen.

Bei Nachfüllen von Öl in einen Öltank eines Flugzeuges ergeben sich unterschiedliche Vorgehensweisen.

Der Stand der Technik zeigt separate Ölnachfüllsysteme, welche es gestatten, mit Druck Öl nachzufüllen, indem im Cockpit ein entsprechender Schalter oder Knopf betätigt wird. Der Ölstand oder Füllstand wird dann auf eine Cockpit-Anzeigevorrichtung übertragen. Dies erfolgt mittels eines Transmitters, der in dem Öltank eingebaut ist. Ein derartiges remote-Füllstandssystem kann auch durch Bodentechniker verwendet werden, die mit speziellen Ausrüstungen versehen sind, um druckbeaufschlagtes Öl in den Öltank einzufüllen oder nachzufüllen.

Weiterhin ist es aus dem Stand der Technik bekannt, insbesondere bei älteren Flugzeugen, das Öl manuell durch einen Einfüllstutzen oder Ähnliches einzufüllen, wobei hierzu die Schwerkraft genutzt wird. Der Einfüllvorgang wird über ein Schauglas überwacht, welches üblicherweise mit unterschiedlichen Füllstands-Anzeigen versehen ist. Die Bedienungsperson kann dann durch Ablesen des Schauglases feststellen, wieviel Öl noch benötigt wird, um den Öltank auf das gewünschte Maximal-Niveau aufzufüllen. In der WO 2004/009962 ist ein Fluggasturbinenöltank mit einem Schauglas offenbart.

Die vorbekannten Techniken zum Befüllen eines Öltanks oder zum Nachfüllen eines Öltanks in manueller Weise durch Schwerkrafteinfluss oder durch druckbeaufschlagtes Füllen sind nicht sehr exakt. Manchmal ist es schwierig, den Füllvorgang korrekt durchzuführen, da der Öltank schlecht zugänglich ist und/oder das Schauglas schlecht erreichbar oder schlecht betrachtbar ist. Hinzu kommen ungünstige Lichtverhältnisse, die ein Ablesen erschweren oder unmöglich machen.

Weiterhin erweist es sich als nachteilig, dass durch Alterung von Öl, durch Verschmutzungen des Öls oder andere Einflüsse sich dessen Farbe verändert. Auch die Farbe des Schauglases kann sich durch Alterung verändern. All dies führt zu einer verschlechterten Ablesegenauigkeit. Auch die Verwendung von farbigen Lichtquellen (violettes Licht) vermag dieses Problem nicht zu lösen. In einigen Fällen ist es erforderlich, dass die Bedienungsperson eine Handlampe oder eine andere Lichtquelle zur Verfügung hat, um die Ablesung durchzuführen. In noch ungünstigeren Fällen ist es erforderlich, mittels eines Spiegels das Schauglas zu betrachten, wenn der Öltank befüllt wird.

Der Erfindung liegt die Aufgabe zugrunde, eine Ableseeinrichtung zur Verfügung zu stellen, welche die Nachteile des Standes der Technik vermeidet und eine exakte Befüllung eines Öltanks in einem Flugzeug ermöglicht.

Erfindungsgemäß wird die Aufgabe durch die Merkmalskombinationen des Anspruchs 1 gelöst, die Unteransprüche zeigen weitere vorteilhafte Ausgestaltungen der Erfindung.

Erfindungsgemäß ist somit vorgesehen, dass dem Öltank eine optische Anzeigevorrichtung zugeordnet ist, welche zumindest einen Licht-Emitter umfasst, welcher einem vorgegebenen Füllstand zugeordnet ist und ein optisches Signal abgibt.

Durch die aktive Ausgestaltung und durch die Abgabe eines optischen Signals ist es auf besonders einfache Weise möglich, den jeweils vorliegenden Füllstand und/oder das Erreichen eines gewünschten Füllstandes darzustellen und der Bedienungsperson anzuzeigen.

In besonders günstiger Ausgestaltung der Erfindung ist der Licht-Emitter in Form einer LED (Leuchtdiode) ausgebildet. Diese Ausgestaltung ist sehr energiesparend und kostengünstig und zeichnet sich durch eine lange Lebensdauer und ein hohes Maß an Zuverlässigkeit aus.

Erfindungsgemäß ist es somit vorteilhaft, wenn die LED in ein Schauglas eines Öltanks eingebaut oder diesem direkt zugeordnet ist oder sich am Boden des Öltanks oder an einer anderen Stelle befindet, welche während des Füllvorganges von einer Bedienungsperson gut einsehbar ist.

Die LED leuchtet erfindungsgemäß dann auf, wenn der entsprechende Füllstand (beispielsweise das maximale Füllniveau) erreicht ist. Auf diese Weise weiß der Techniker/die Bedienungsperson, dass keine zusätzliche Ölmenge mehr erforderlich ist.

In vorteilhafter Ausgestaltung der Erfindung kann vorgesehen sein, dass die LED durch Energie versorgt wird, welche von dem Öltank-Mengenanzeiger-Transmitter zur Verfügung gestellt wird. Der Transmitter ist erforderlich, um Ölstandsinformationen im Cockpit anzuzeigen. Somit ist keine zusätzliche Energieversorgung für die LED erforderlich. Bei stillstehender Fluggasturbine oder stillstehendem Motor ist es möglich, die Energieversorgung durch eine Batterie oder einen Kondensator sicherzustellen, so dass die benötigte Energie bei laufender Turbine oder laufendem Motor gespeichert und bei stillstehendem Motor oder stillstehender Turbine während des Öl-Einfüllvorgangs bereitgestellt werden kann.

Bei Verwendung eines Kondensators kann dieser so bemessen sein, dass er für einen vorgegebenen Zeitraum (beispielsweise 30 Minuten) Energie zuführt, nachdem die Turbine bzw. der Flugzeugmotor abgeschaltet wurden. Dieser Zeitraum reicht aus, um dem Techniker oder der Bedienungsperson das Überprüfen des Öl-Füllstandes und das Nachfüllen von Öl zu ermöglichen.

Erfindungsgemäß ist es nicht erforderlich, dass die LEDs sich direkt in Kontakt mit dem Öl in dem Öltank befinden. Auf diese Weise wird das Oxidationsrisiko der LED-Anschlüsse minimiert. Die LED kann an der Außenseite des Tanks oder an anderer geeigneter Stelle gelagert und mit einer elektrischen Brücke versehen sein, die durch eine Widerstandsänderung den Ölstand in dem Tank ermittelt und elektrisch auswertet. Auf diese Weise kann Energie zu der LED übertragen werden. Hierbei ist es günstig, wenn eine Kalibrierung des Systems im Hinblick auf unterschiedliche Füllstände für jeden individuellen Öltank ermöglicht wird, um die Genauigkeit zu steigern und Unterschiede in der Wanddicke und dem Herstellungsverfahren des Öltanks zu eliminieren.

Die LED kann auch in dem Schauglas integriert sein, so dass die Anschlüsse der LED sich direkt in den Öltank erstrecken und auf diese Weise ermittelbar ist, wenn der jeweilige Ölstand die Anschlussdrähte der LED berührt. Hierdurch kann ein exaktes Schalten der LED erfolgen, um dem Techniker den Ölstand anzuzeigen.

Im Falle eines Versagens der LED oder des zugeordneten Schaltkreises ist es besonders vorteilhaft, wenn eine zweite LED als Sicherheits-LED vorgesehen ist, welche zumindest den maximalen Füllstand des Öltanks überwacht. Diese Sicherheits-LED kann mit unterschiedlicher Farbe versehen sein, um Fehlablesungen zu verhindern.

Besonders günstig ist es auch, wenn eine dritte LED vorgesehen ist, die dem Techniker oder der Bedienungsperson anzeigt, wenn ein bestimmtes Niveau, welches um einen vorgegebenen Wert unterhalb des maximalen Füll-Niveaus liegt, erreicht ist. Dieses kann beispielsweise um eine US pint geringer sein, als das maximale Füllniveau. Somit ergibt sich eine Warnung für den Techniker oder die Bedienungsperson, aus welcher diese ersehen kann, dass der maximale Füllstand bald erreicht ist und dass der Nachfüllvorgang zeitnah zu beenden ist. Auf diese Weise wird verhindert, dass zuviel Öl eingefüllt wird, welches nachfolgend abgeführt werden muss oder aus Austrittsöffnungen austritt.

Die Erfindung bringt somit den Vorteil, dass das Einfüllen von Öl in den Öltank vereinfacht wird und dass der Techniker/die Bedienungsperson in akkurater Weise den Ölstand ablesen kann. Hierbei sind keine Hilfsmittel, wie etwa zusätzliche Lampen, Spiegel oder Ähnliches erforderlich.

Erfindungsgemäß ergibt sich somit eine verkürzte Nachfüllzeit. Auf die Verwendung zusätzlicher Spezialwerkzeuge kann verzichtet werden, insbesondere bei unten liegenden und schlecht zugänglichen Öltanks.

Weiterhin ergibt sich erfindungsgemäß eine optimierte Nutzung des Ölvolumens, da ein überzähliges Einfüllen von Öl ausgeschlossen wird.

Im Folgenden wird die Erfindung anhand eines Ausführungsbeispiels in Verbindung mit der Zeichnung beschrieben. Dabei zeigt:
- Fig. 1: eine schematische Gesamtdarstellung eines Ölsystems einer Fluggasturbine, und
- Fig. 2-5: Darstellungen eines Ausführungsbeispiels der Erfindung in unterschiedlichen Betriebszuständen.

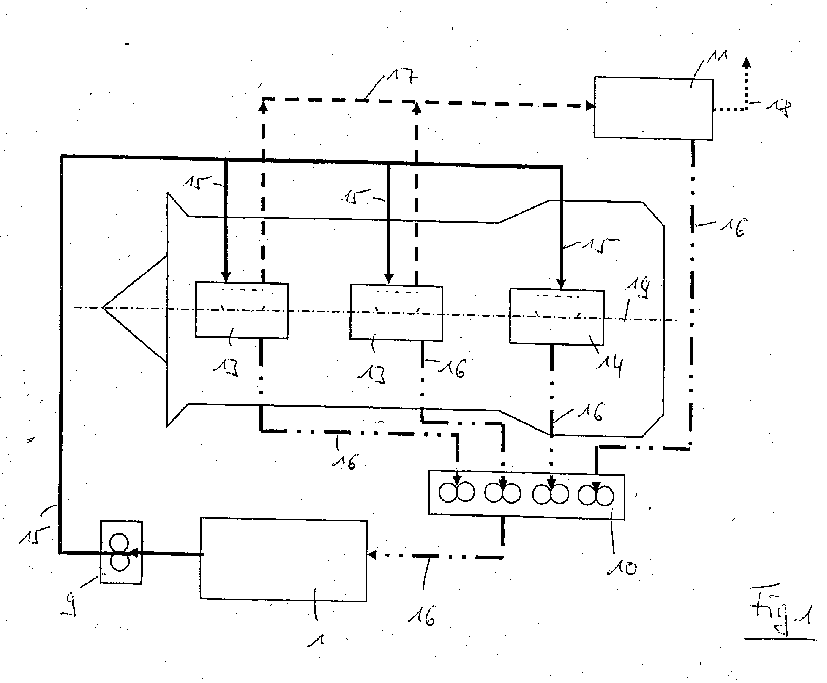

Die Fig. 1 zeigt eine schematisch dargestellte Fluggasturbine mit einer Maschinenachse 1, auf welcher zwei belüftete Lagerkammern 13 sowie eine unbelüftete Lagerkammer 14 angeordnet sind. Die Lagerkammern 13 und 14 werden durch eine Zuführleitung 15 mittels einer Ölpumpe 9 aus einem Öltank 1 mit Öl versorgt. Das Öl verlässt die Lagerkammern 13 und 14 durch Rückführleitungen 16, welche zu einer Rückführpumpeneinheit 10 führen. Durch die Rückführleitung 16 gelangt das rückzuführende Öl in den Öltank 1.

Die Fig. 1 zeigt weiterhin Entlüftungsleitungen 17, die von den Lagerkammern 13 und 14 zu einem Entlüfter 11 (Breather) führen, der mit einer externen Entlüftungsleitung 18 verbunden ist sowie mit einer Öl-Rückführleitung 16 in Verbindung steht.

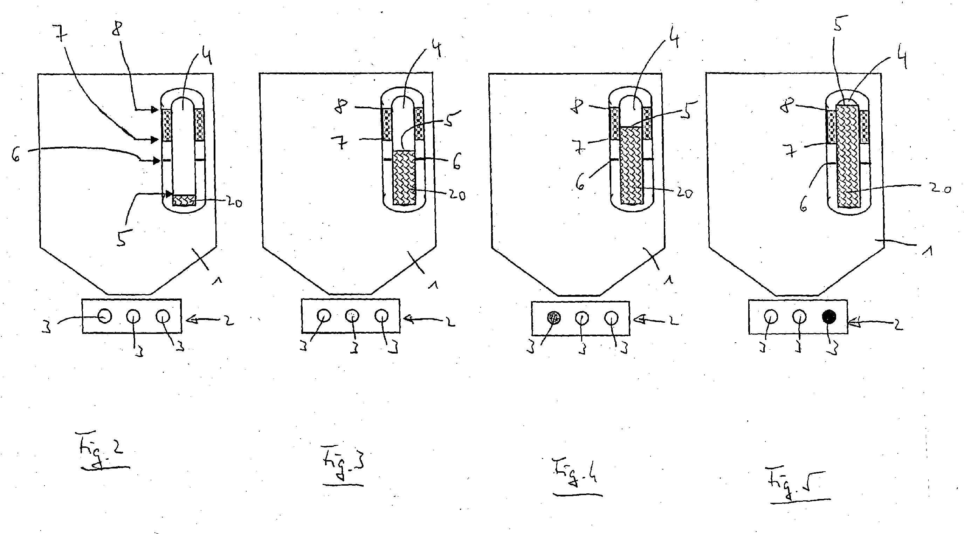

Die Fig. 2-4 zeigen ein Ausführungsbeispiel eines Öltanks 1 in schematischer Darstellung. Dieser umfasst ein Schauglas 4, an welchem unterschiedliche Füllstands-Markierungen angebracht sind, nämlich ein oberer Füllstand 8, ein unterer Füllstand 7 sowie ein Füllstand 6, welcher um eine vorgegebene Einheit unter dem unteren Füllstand 7 liegt.

Mit dem Bezugszeichen 5 ist der aktuelle Füllstand angegeben, welcher einer vorgegebenen Menge an Öl 20 zugeordnet ist.

Erfindungsgemäß ist eine optische Anzeigevorrichtung 2 vorgesehen, welche bei dem Ausführungsbeispiel mit drei LEDs 3 versehen ist.

Die Fig. 2 zeigt einen Zustand, bei welchem keine optische Anzeige durch die LEDs 3 erfolgt, da der Ölstand zu niedrig ist und das Nachfüllen von Öl erforderlich ist.

In Fig. 3 ist die mittlere LED 3 mit einer gelben Farbe ausgestattet. Ihr Aufleuchten zeigt an, dass der Ölstand noch unterhalb der unteren Füllmarke 7 ist, sich jedoch bereits innerhalb eines Bereichs (oberhalb des Füllstands 6) befindet, in welchem das Nachfüllen einer vorgegebenen Einheit, beispielsweise ein US quart liegt.

Die Fig. 4 zeigt einen Zustand, bei welchem die linke LED aufleuchtet. Diese ist mit grüner Farbe versehen und zeigt an, dass der Ölstand sich oberhalb der unteren Füllmarke 7 und unterhalb der oberen Füllmarke 8 befindet.

Die Fig. 5 zeigt einen Betriebszustand, bei welchem die rechte LED leuchtet, welche mit roter Farbe ausgestattet ist. Der Ölstand befindet sich oberhalb der oberen Füllstandsmarke 8. Somit wird angezeigt, dass das Risiko einer Überfüllung gegeben ist.

Die Erfindung ist nicht auf das gezeigte Ausführungsbeispiel beschränkt, vielmehr ergeben sich im Rahmen der Erfindung vielfältige Abwandlungs- und Modifikationsmöglichkeiten.

### Bezugszeichenliste

- 1: Öltank
- 2: Optische Anzeigevorrichtung
- 3: LED
- 4: Schauglas
- 5: Aktueller Füllstand
- 6: Füllstand eine Einheit unter unterem Füllstand
- 7: Unterer Füllstand
- 8: Oberer Füllstand
- 9: Ölpumpe
- 10: Rückführpumpeneinheit
- 11: Entlüfter (Breather)

- 13: Belüftete Lagerkammer
- 14: Unbelüftete Lagerkammer
- 15: Zuführleitung
- 16: Rückführleitung
- 17: Entlüftungsleitung
- 18: Externe Entlüftungsleitung
- 19: Maschinenachse
- 20: Öl

## Patentansprüche

1. Fluggasturbinenöltank mit einem Gehäuse, welches mit einer Einfüllöffnung verbunden ist, und mit einer optischen Anzeigevorrichtung (2), wobei die optische Anzeigevorrichtung (2) mehrere jeweils in Form einer LED ausgebildete Licht-Emitter (3) umfasst, welche unterschiedlichen vorgegebenen Füllständen zugeordnet sind, die von einem Öltank-Mengenanzeigen-Transmitter zur Verfügung gestellt werden und einer Bedienungsperson ein optisches Signal abgeben, wobei die Anzeigevorrichtung (2) sich an einer Stelle befindet, welche während des Füllvorgangs von einer Bedienungsperson gut einsehbar ist.

2. Fluggasturbinenöltank nach Anspruch 1, **dadurch gekennzeichnet, dass** eine Energieversorgung für den Licht-Emitter (3) vorgesehen ist.

3. Fluggasturbinenöltank nach Anspruch 2, **dadurch gekennzeichnet, dass** die Energieversorgung in Form eines Kondensators ausgebildet ist.

4. Fluggasturbinenöltank nach Anspruch 1, **dadurch gekennzeichnet, dass** die mehreren Licht-Emitter mit unterschiedlichen Farben versehen sind.

5. Fluggasturbinenöltank nach einem der Ansprüche 1 bis 4, **dadurch gekennzeichnet, dass** die Anzeigevorrichtung (2) mit einem Schauglas (4) gekoppelt ist.

## Claims

1. Aircraft gas turbine oil tank having a casing, which is connected to a filler port, and an optical indicator (2), where the optical indicator (2) includes several light emitters (3), each being designed in the form of an LED, which are associated with different specified filling levels provided by a quantity-indicating transmitter of the oil tank and emit an optical signal to an operator, where the indicator (2) is provided at a place that can be well observed by an operator during the filling operation.

2. Aircraft gas turbine oil tank in accordance with Claim 1, **characterized in that** a power supply is provided for the light emitter (3).

3. Aircraft gas turbine oil tank in accordance with Claim 2, **characterized in that** power supply is designed in the form of a capacitor.

4. Aircraft gas turbine oil tank in accordance with Claim 1, **characterized in that** the several light emitters are provided with different colors.

5. Aircraft gas turbine oil tank in accordance with one of the Claims 1 to 4, **characterized in that** the indicator (2) is coupled to a sight glass (4).

## Revendications

1. Réservoir d'huile de turbine à gaz aéronautique, constitué d'une carcasse reliée à un orifice de remplissage, ainsi que d'un dispositif indicateur (2) optique, sachant que le dispositif indicateur (2) optique comprend plusieurs émetteurs de lumière (3) respectivement conçus sous forme d'une LED et qui sont affectés à différents niveaux de remplissage prédéfinis fournis par un transmetteur indicateur de quantité d'huile dans le réservoir, et émettent un signal optique à l'attention d'un opérateur, le dispositif indicateur (2) se trouvant à un endroit bien visible par un opérateur pendant l'opération de remplissage.

2. Réservoir d'huile de turbine à gaz aéronautique selon la revendication n° 1, **caractérisé en ce qu'**est prévue une alimentation en énergie pour l'émetteur de lumière (3).

3. Réservoir d'huile de turbine à gaz aéronautique selon la revendication n° 2, **caractérisé en ce que** l'alimentation en énergie est conçue sous forme d'un capaciteur.

4. Réservoir d'huile de turbine à gaz aéronautique selon la revendication n° 1, **caractérisé en ce que** les plusieurs émetteurs de lumière sont dotés de couleurs différentes.

5. Réservoir d'huile de turbine à gaz aéronautique selon une des revendications n° 1 à n° 4, **caractérisé en ce que** le dispositif indicateur (2) est couplé à un regard (4).
